# EUROPEAN PATENT APPLICATION

(11) **EP 1 713 233 A1**
(43) Date of publication of application: **18.10.2006**
(21) Application number: 05290832.4
(22) Date of filing: 14.04.2005
(51) Int. Cl.: H04L 29/08

(54) **Interconnection of domains in a peer to peer network**

(71) Applicant: ALCATEL, 75008 Paris (FR)
(72) Inventor: Tomsu, Marco, 71254 Ditzingen (DE); Domschitz, Peter, 70191 Stuttgart (DE); Strauss, Thomas, 73734 Esslingen (DE)
(74) Representative: Brose, Gerhard

(57) **Abstract**

The invention concerns a method for providing a connection between two domains (GSPR, LSPR) of contiguous hierarchy of a communication network comprising peers (SP1-SP13, NP1-NP4) by means of at least one dedicated peer (PP1, PP2) whereby said at least one dedicated peer (PP1, PP2) connects said two domains (GSPR, LSPR), controls the access or the traffic flow between said two domains (GSPR, LSPR), acts as a member of said both domains (GSPR, LSPR) and performs the same tasks that are performed by the peers that belong to said two domains (GSPR, LSPR), a dedicated peer, a program module and a communication network therefor.

## Description

The invention relates to a method for providing a connection between two domains of contiguous hierarchy of a communication network according to the preamble of claim 1, a dedicated peer according to the preamble of claim 8, a program module according to the preamble of claim 9 and a communication network according to the preamble of claim 10.

Session-oriented conversational and collaboration or community services over Internet like e.g. voice or multimedia con-ferencing, instant messaging, push-to-talk (PTT) and information sharing gain increasingly in importance for carriers like e.g. Application Service Providers (ASPs), Internet Service Providers (ISPs) and Network Service Providers (NSPs) and enterprises.

For competition reasons, the platform solutions for these types of services have to be more and more low cost in terms of capital expenditure (CAPEX) and operational expenditure (OPEX). Operators demand for least-infrastructure and zero-administration approaches, which have to be secure, self-organizing, robust against attacks and partial network failures. To offer trusted environments to the users, a domain structuring is required. The problem to be solved here is the autonomous organization and structuring of networks across administrative domains. This requires the awareness of peers network locality.

There are two principal approaches for low CAPEX/OPEX solutions.

First, central application server based approaches can be used like e.g. Microsoft Netmeeting which offer directories, collaborative working tools and Voice over Internet Protocol (VoIP) based on Session Initiation Protocol (SIP) or H.323 standard. In such centralized systems, all function and information is centralized on a single server with many clients connecting directly to the server. Both flow control and data flow take place through the central server.

Second, distributed peer-to-peer network approaches can be used like e.g Skype and Kazaa or JXTA from Sun for VoIP telephony/conferencing, instant messaging and file sharing. All peers, as e.g. workstations, in a peer-to-peer network have equivalent capabilities and responsibilities and act both as a client and a server. This differs from client/server architectures, in which some computers are dedicated to serving the others.

Today's central server based solutions, e.g. according to the classical SIP model, offer good domain based control concepts, but they are faced with massive scalability and security problems, as they have a single point of failure and offer a central target for network and service attacks. Furthermore, scalability is limited by central server capacity and server-network connection.

Common distributed peer-to-peer approaches, like e.g. Skype, have the disadvantage to offer no domain concepts for confidential and trusted networking, but on the other hand they need only low administrative effort as no central connection server has to be maintained.

Both approaches have therefore major drawbacks to meet the requirements as stated above.

The object of the invention is to propose a method for providing a connection between different domains of contiguous hierarchy of a communication network comprising peers allowing for autonomous organization and structuring of the communication network across the different administrative domains of the communication network.

This object is achieved by a method according to the teaching of claim 1, a dedicated peer according to the teaching of claim 8, a program module according to the teaching of claim 9 and a communication network according to the teaching of claim 10.

The main idea of the invention is, that in order to leverage the advantages of common distributed architectures like scalability, robustness and autonomy based on common peer-to-peer solutions like e.g. the distributed lookup protocol Chord, described e.g. in "Chord: A scalable peer-to-peer lookup service for internet applications", Ion Stoica et al., Proc. ACM SIGCOMM 2001, August 2001, a new (virtual) network element, i.e. a dedicated peer called herein proxypeer is introduced in addition to normal peers and superpeers in communication networks with a federated hierarchical network structure. A superpeer is distinct from a normal peer in that a superpeer is more powerful and reliable than a normal peer, has high network connection bandwidth and/or high CPU power (CPU = central processing unit). The term hierarchy herein is used in the sense of a certain level of confidentiality or a certain level of information. A domain is built by peers having an equivalent hierarchical level, i.e. they have an equivalent level of confidentiality or an equivalent level of information. Domains of contiguous hierarchy are distinct from each other in that they comprise different kinds of peers having a different level of confidentiality, a different level of information and/or performing different tasks that are related to the respective hierarchy level.

The newly introduced proxypeers hold the interfacing role between two contiguous hierarchy levels of such a communication network, called herein local domain and global domain. However, the described principle is not limited to networks with two hierarchy levels only. Also the term "local" is not restricted to a location, or to network topologies. It can also be interpreted as a virtual neighborhood in groups having same properties or interests, like members of a team or company.

Proxypeers are at the same time participating in the network structures of two hierarchy levels and are guaranteeing for traffic locality and network integrity by defining a border between these two domains. This means that local peers first try to connect to the local domain to keep traffic and topology information internally. The storage and lookup of data, users and services is primarily done in the local domain to achieve a better data consistency, service integrity and continuity of service at the local domain e.g. in case of failures of the upper hierarchy level or losing connection to the Internet. For maximum trust of the offered network services, all confidential data and services are kept local and independent of domains other than the local domain, e.g. private directories and documents should be kept local. If peers still want to participate in services of, or offer services to the higher hierarchy levels, here the global domain, like e.g. global voice services, the proxypeers handle the exchange of information and requests between the local domain and the global domain. The confidentiality level of every single service advertisement like published documents, voice service username/number, department information, etc., is graded in a generic way and as such respected by the proxypeers.

As common in most peer-to-peer networks, this new federated hierarchical network structure is built and maintained in an autonomous way by the peers itself and requires not more administrative effort than today's peer-to-peer networks.

Further developments of the invention can be gathered from the dependent claims and the following description.

In the following the invention will be explained further making reference to the attached drawings.

Fig. 1 shows an example of a federated hierarchical overlay network structure with two domains with an exemplary superpeer ring structure.

Fig. 2 shows an example for hierarchical domains with proxypeers with a basic redundancy concept.

Fig. 3 shows an example for a normal peer offering two different services to the network, one graded as local and the second graded as global.

A communication network in which the invention can be implemented comprises peers belonging to a first domain and peers belonging to a second domain with the domains having contiguous hierarchy. Among these peers, there is at least one peer called proxypeer that belongs to both the first and the second domain.

The peers of the first domain are connected with each other by means of wireline or wireless connections like e.g. Intranet connections, LAN connections (LAN = Local Area Network), Internet connections or WLAN connections (WLAN = Wireless Local Area Network), and the peers of the second domain are also connected with each other by means of such connections.

The two domains can be connected to further domains or other fixed or wireless networks via at least one of said peers by means of wireless or wireline connections.

The peers are devices that can be both client and server like e.g. customary computers, SIP phones (SIP = Session Initiation Protocol) or wireless handheld devices like e.g. Personal Digital Assistants (PDAs) or smartphones.

According to the invention, a proxypeer comprises the functionality of a peer, belongs to at least two domains and additionally comprises means for connecting said domains. Furthermore, a proxypeer comprises means for controlling the access or traffic flow between said at least two domains.

In the following, by way of example, the method according to the invention is described in detail making reference to the figures.

In traditional peer-to-peer systems, there exists only a single flat structure of so-called superpeers, suited e.g. to implement the well understood so-called Chord technology. The normal peers, e.g. telephones, are connected in a redundant way to several superpeers.

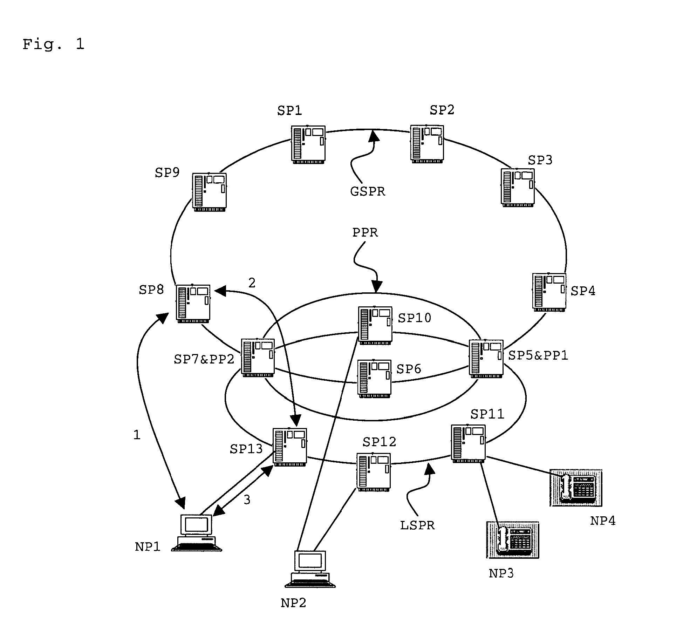

In figure 1, the domain structuring approach and the related role of the new proxypeers PP1, PP2 according to the invention by way of example realized as ring structure, suited e.g. for the implementation of Chord technology, is shown.

The communication network according to the invention depicted in fig.1 comprises by way of example four normal peers NP1-NP4 and thirteen superpeers SP1-SP13.

The nine superpeers SP1-SP9 are connected in such a way that they build a ring structure which is called global domain superpeer ring GSPR, i.e. these superpeers SP1-SP9 build a domain called global domain in our example.

The six superpeers SP5, SP7 and SP10-SP13 are connected in such a way that they build a ring structure which is called local domain superpeer ring LSPR, i.e. these superpeers SP5, SP7 and SP10-SP13 build a domain called local domain in our example.

The normal peer NP1 is connected to the superpeer SP13, the normal peer NP2 is connected to the superpeers SP10 and SP12, and the normal peers NP3 and NP4 are both connected to the superpeer SP11.

The separation of domains and the hierarchical federated architecture is achieved by adding the new proxypeers PP1, PP2 according to the invention. The superpeers with the unique identifications SP5 and SP7 are participating in their role as proxypeers at the same time in the superpeer structures of two hierarchy levels, here the global domain superpeer ring GSPR and the local domain superpeer ring LSPR. A proxypeer PP1 or PP2 has two legs. On the one side, it is a local superpeer and joins the local domain superpeer ring LSPR and on the other side, it is a global superpeer and joins the global domain superpeer ring GSPR. The local domain superpeer ring LSPR handles all local service traffic, like queries and publications of services and information in a local domain. The global domain superpeer ring GSPR is responsible for global concerns, e.g. worldwide access to a service via the internet.

The interfacing proxypeers PP1, PP2 are organized among themselves, e.g. as a proxypeer ring PPR in our example suited to implement e.g. the Chord technology.

Information and services are distributed e.g. by Chord technology to certain superpeers SP1-SP13 in the superpeer rings GSPR and LSPR. These superpeers SP1-SP13 are linked to certain proxypeers PP1, PP2, which organize publishing or lookups of information and services in the next hierarchy level, i.e. in the next domain. Hence proxypeers PP1, PP2 decide if they route the publication of, or the lookup for data and services, to another domain, e.g. to the public Internet. Further, if there are queries from outside, proxypeers PP1, PP2 decide whether they will route them into the local domain or not.

New mechanisms are useful or required among all participating peers for the autonomous organization of this new federated hierarchical network structure.

In a preferred embodiment, in case of a connection setup of a booting peer to a superpeer, this superpeer checks for advertisements of normal peers and superpeers located in the same domain as the booting peer. Where applicable, the superpeer refers the booting peer to the better suited neighbor(s). Figure 1 gives an example for this feature: After booting, the normal peer NP1 first logs-on to the superpeer SP8, which is known to the normal peer NP1 e.g. from local peer cache or bootstrap mechanism (indicated by the double-arrow labeled 1 in fig. 1) The superpeer SP8 now looks for advertisements of better located superpeers SP10-SP13 in the same domain as the normal peer NP1 (indicated by the double-arrow labeled 2 in fig. 1) and refers the normal peer NP1 to the local superpeer SP13 for connection (indicated by the double-arrow labeled 3 in fig. 1).

In another preferred embodiment, a peer's role to play in the communication network is detected and adapted on any network changes. A peer can become automatically a proxypeer of a domain e.g if no proxypeer is available, to prevent the existing proxypeers from overload situations or for redundancy requirements. Adapted to the example in figure 1, this means that if the proxypeers PP1 and PP2 are overloaded with superpeer connections, a suitable additional proxypeer is selected from the local domain SP ring LSPR, e.g. the superpeer SP10.

In another preferred embodiment, if peers get knowledge of other local peers e.g. by refer-mechanisms, LAN broadcast and the like, they automatically start building a local domain with normal peers, superpeers and proxypeers with according structures, e.g. a superpeer ring and a proxypeer ring. This results in an exemplary hierarchical network as shown in figure 1.

In another preferred embodiment, proxypeers provide efficient and autonomous mechanisms for redundant storage of information across domains. Proxypeers recognize their redundancy status and involve, if necessary, further redundant proxypeers for managing the database information like DHT-keys (DHT = distributed hash table) and service advertisements.

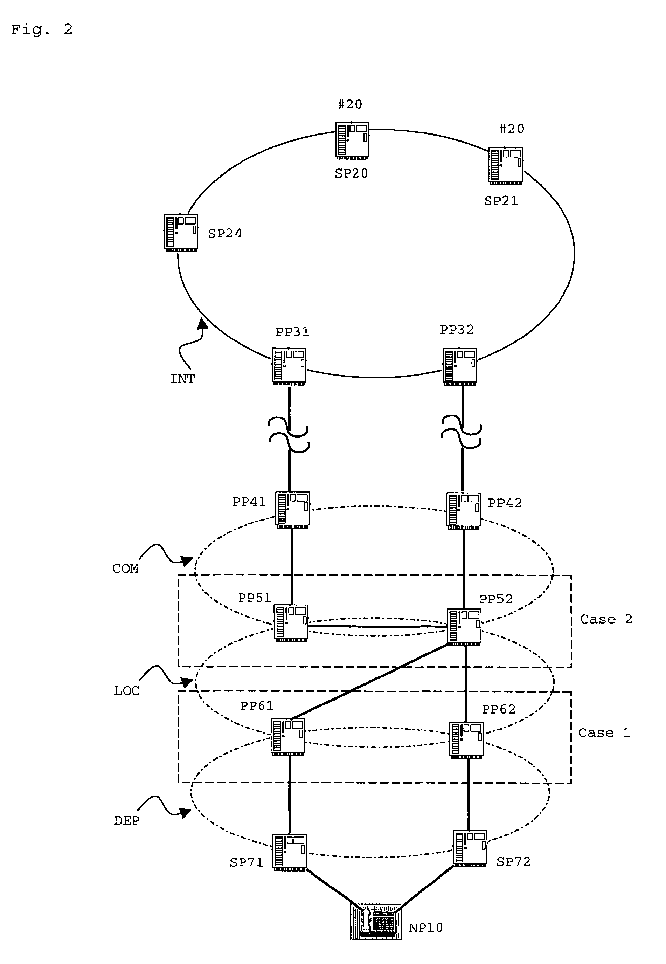

Figure 2 shows an example for 1:1 redundancy for the global advertisements of the normal peer NP10 across multiple hierarchy levels.

The communication network according to the invention depicted in fig.2 comprises by way of example a normal peer NP10, five superpeers SP20, SP21, SP24, SP71 and SP72 and eight proxypeers PP31-32, PP41-42, PP51-52 and PP61-62.

The normal peer NP10 is connected to two superpeers SP71 and SP72. These two superpeers SP71 and SP72 are connected in such a way with the two proxypeers PP61 and PP62 that they build together the domain of a local department of a company DEP in form of a ring structure.

The four proxypeers PP61, PP62, PP51 and PP52 are connected in such a way that they build the domain of a location of the company LOC in form of a ring structure, and the four proxypeers PP51, PP52, PP41 and PP42 are connected in such a way that they build the domain of the company worldwide COM in form of a ring structure. Finally, the three superpeers SP20, SP21 and SP24 and the two proxypeers PP31 and PP32 are connected in form of a ring structure and belong to the hierarchical level of the global internet INT.

The global advertisement of the normal peer NP10 shall occur in the superpeer SP20, as e.g. determined by a hash procedure according to the Chord technology. Therefore, the normal peer NP10 has to send a notice to the superpeer SP20 to make itself known. The aim is to have in this example in every hierarchical level two peers being involved in the advertisement procedure. The flow of the notice up to the global internet INT is indicated in fig. 2 by lines.

The normal peer NP10 sends the key "#20", addressing the superpeer SP20, to the superpeer SP71 and SP72. Then, each of the proxypeers PP61 and PP62 receive the key "#20" from only one superpeer SP71 or SP72 respectively, which is called case 1 and is indicated by a dotted box in fig. 2. As proxypeer PP62 receives the key "#20" from only one superpeer SP72, it knows that another proxypeer, here proxypeer PP61, is available for redundancy. So no action has to be undertaken by proxypeer PP62 to achieve redundancy. Afterwards, the proxypeer PP52 receives two same keys "#20" from the two proxypeers PP61 and PP62, which is called case 2 and is indicated by a dotted box in fig. 2. Thus, the proxypeer PP52 knows that it has to incorporate a new redundant proxypeer PP51. Finally, the notice with the key"#20" is sent on the one hand via proxypeers PP51, PP41 and PP31 and on the other hand via proxypeers PP52, PP42 and PP32 to the global internet INT. Here, the global advertisement is stored in the superpeer SP20 and, for redundancy reasons, also in the superpeer SP21.

This example also demonstrates the scalability of the mechanism, where the number of involved proxypeers is automatically kept to two for each domain hierarchy level.

In another preferred embodiment, the confidentiality level of every single service advertisement is graded in a generic way and respected by the proxypeers. By regarding this information each proxypeer determines whether the information can be published to the next higher hierarchy level, i.e. domain, or should be kept local.

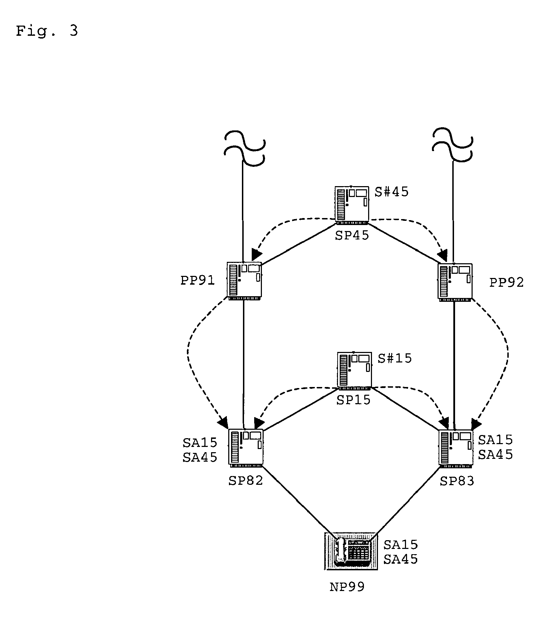

Figure 3 shows an example for a normal peer NP99 offering two different services to the communication network, the first service graded as local and the second service graded as global.

The communication network according to the invention depicted in fig.3 comprises by way of example a normal peer NP99, four superpeers SP15, SP45 and SP82-83 and two proxypeers PP91-92.

The normal peer NP99 is connected to two superpeers SP82 and SP83 of a local domain which in turn are connected to a global domain via proxypeers PP91 and PP92 respectively. The superpeer SP15 belongs to the local domain and is connected to both the superpeer SP82 and the superpeer SP83 and the superpeer SP45 belongs to the global domain and is connected to both the proxypeer PP91 and the proxypeer PP92.

The description and the confidentiality grade are described within the service advertisement SA15 of the local service and within the service advertisement SA45 of the global service. The responsible redundant superpeers SP82 and SP83 are publishing the service advertisements SA15 and SA45 to the communication network. The searchable service key S#15 of the local service described by the service advertisement SA15 is stored locally at the superpeer SP15. The searchable service key S#45 of the global service described by SA45 is published via the two proxypeers PP91 and PP92 to the global domain and are stored at the superpeer SP45.

From the global domain, one gets access to the global service advertisement SA45 from the superpeer SP45 either via the proxypeer PP91 to the superpeer SP82, or via the proxypeer PP92 to the superpeer SP83, which is indicated by the dotted arrows.

As the local service advertisement SA15 is not known in the global domain, one gets access to the local service advertisement SA15 only from the local domain from the superpeer SP15 to the superpeer SP82 or to the superpeer SP83, indicated by the dotted arrows.

In another preferred embodiment, existing keep-alive mechanisms are adapted to maintain the connections of proxypeers to the communication network across different hierarchy levels in case of IP-address changes, distortion of network address or port address translation and network or node failures. Furthermore, proxypeers have to support limited lifetime of service advertisements and DHT keys by implementing suitable update messages and dynamic cache cleanup.

## Claims

1. A method for providing a connection between two domains (GSPR, LSPR) of contiguous hierarchy of a communication network comprising peers (SP1-SP13, NP1-NP4) by means of at least one dedicated peer (PP1, PP2) **characterized in, that** said at least one dedicated peer (PP1, PP2) connects said two domains (GSPR, LSPR), controls the access or the traffic flow between said two domains (GSPR, LSPR), acts as a member of said both domains (GSPR, LSPR) and performs the same tasks that are performed by the peers that belong to said two domains (GSPR, LSPR).

2. A method according to claim 1, **characterized in, that** a peer (SP1-SP13, NP1-NP4) becomes a dedicated peer automatically if certain network conditions are fulfilled.

3. A method according to claim 1, **characterized in, that** if a peer (SP5) recognizes that it has the task to build a domain and gets knowledge of at least one other peer (SP11) also having the task to build a domain, said at least two peers (SP5, SP11) automatically build said domain (LSPR) comprising at least one dedicated peer (PP1).

4. A method according to claim 1, **characterized in, that** said two domains (GSPR, LSPR) of contiguous hierarchy of the communication network have different confidentiality levels and that said at least one dedicated peer (PP1, PP2) controls the access or traffic flow between said two domains (GSPR, LSPR) according to said confidentiality level.

5. A method according to claim 1, **characterized in, that** said at least one dedicated peer (PP1) recognizes his redundancy status and involves in case of insufficient redundancy at least one other redundant dedicated peer (PP2) for managing database information.

6. A method according to claim 1, **characterized in, that** if a peer (NP1) tries to setup a connection to another peer (SP8), said other peer (SP8) checks for advertisements of peers that are located more appropriately than itself and in case of the existence of a peer (SP13) that is located more appropriately, the booting peer (NP1) is referred to said peer (SP13) for connection.

7. A method according to claim 1, **characterized in, that** keep-alive mechanisms are used to maintain the connections of dedicated peers (PP1, PP2) to the communication network across different domains (GSPR, LSPR) in case of IP-address changes, distortion of network address or port address translation or network or node failures.

8. A dedicated peer (PP1, PP2) for providing a connection between two domains (GSPR, LSPR) of contiguous hierarchy of a communication network comprising peers (SP1-SP13, NP1-NP4) **characterized in, that** said dedicated peer (PP1, PP2) comprises means for connecting said two domains (GSPR, LSPR), for controlling the access or traffic flow between said two domains (GSPR, LSPR), for acting as a member of both domains (GSPR, LSPR) and for performing the same tasks that can be performed by the peers that belong to said two domains (GSPR, LSPR).

9. A program module to be executed in a dedicated peer (PP1, PP2) for providing a connection between two domains (GSPR, LSPR) of contiguous hierarchy of a communication network comprising peers (SP1-SP13, NP1-NP4), **characterized in, that** if the program module is activated, said dedicated peer (PP1, PP2) connects said two domains (GSPR, LSPR), controls the access or traffic flow between said two domains (GSPR, LSPR), acts as a member of said both domains (GSPR, LSPR) and performs the same tasks that can be performed by the peers that belong to said two domains (GSPR, LSPR).

10. A communication network comprising peers (SP1-SP13, NP1-NP4) and at least one dedicated peer (PP1, PP2) and that is subdivided into at least two domains (GSPR, LSPR), **characterized in, that** said at least one dedicated peer connects two of said at least two domains (GSPR, LSPR) of contiguous hierarchy of the communication network, controls the access or traffic flow between said two of said at least two domains (GSPR, LSPR), acts as a member of said two of said at least two domains (GSPR, LSPR) and performs the same tasks that can be performed by the peers that belong to said two of said at least two domains (GSPR, LSPR).
